# EUROPÄISCHE PATENTANMELDUNG

(11) **EP 2 452 802 A1**
(43) Veröffentlichungstag der Anmeldung: **16.05.2012**
(21) Anmeldenummer: 11009047.9
(22) Anmeldetag: 15.11.2011
(51) Int. Cl.: B29C 47/12, B29C 47/08, B29L 23/18, B29C 49/00, B29C 47/90

(54) **Korrugatoreinrichtung mit Entformungselement**

(30) Priorität: 15.11.2010 DE 102010051181
(71) Anmelder: UNICOR GmbH, 97437 Hassfurt (DE)
(72) Erfinder: Neubauer, Gerhard, 97486 Königsberg-Römershofen (DE)
(74) Vertreter: Köhler, Walter

(57) **Zusammenfassung**

Es wird eine Korrugatoreinrichtung beschrieben zur Herstellung von Kunststoffrohren (4), vorzugsweise Wellrohren aus einem aus einem Extruder (2) austretenden Kunststoffschmelzeschlauch, mit einem aus wandernden Formbacken (3f) gebildeten Formkanal (3k) und einer Entformungseinrichtung (5) für das am Ende des Formkanals (3k) austretende Kunststoffrohr (4). Die Entformungseinrichtung (5) umfasst ein stromabwärts unmittelbar hinter dem Formkanal (3k) in dem austretenden Kunststoffrohr (4) angeordnetes stab- oder rohrförmiges Entformungselement (5s), das durch ein den Formkanal (3k) axial durchgreifendes Spannelement (6) in Bezug auf den Formkanal (3k) lagefixiert ist. Das Spannelement (6) ist mit einer Spannkraft belastet und zwischen einem stromaufwärts vor dem Formkanal (3k) angeordneten ersten Lager und einem stromabwärts hinter dem Entformungselement (5s) angeordneten magnetischen zweiten Lager ausgespannt.

## Beschreibung

Die Erfindung betrifft eine Korrugatoreinrichtung zur Herstellung von Kunststoffrohren, insbesondere von Wellrohren.

Eine Korrugatoreinrichtung weist einen aus wandernden Formbackenpaaren gebildeten Formkanal und eine Entformungseinrichtung aus. Aus der Düse des Spritzkopfs eines Extruders tritt ein Kunststoffschmelzeschlauch in den Formkanal des Korrugators ein, um in dem Formkanal unter Abkühlung als das Kunststoffrohr ausgeformt zu werden. Am Ende des Formkanals tritt das fertige Kunststoffroh als Endlosrohr aus.

Eine solche Korrugatoreinrichtung ist z. B. aus DE 1 102 674 B1 bekannt. In diesem Dokument ist vorgesehen, dass sich die Formbacken hintereinander liegend in zwei umlaufenden Transportsträngen in Art von zwei umlaufend angetriebenen Förderbändern bewegen. Der Formkanal ist in der gemeinsamen Förderstrecke, in der die Formbacken der Formbackenpaare einander zugewandt sind, ausgebildet. Die Formbacken weisen zur Herstellung von Wellrohren gewellte Formflächen auf. Sie sind in der den Formkanal bildenden Formstrecke gekühlt, so dass in dem Formkanal unter Abkühlung des plastifizierten heißen Kunststoffschlauchs ein endloses Wellrohr ausgeformt wird.

Wellrohre mit sehr geringem Durchmesser in der Größenordnung von Millimetern neigen dazu, durch partielles Anhaften an den sich wieder öffnenden Formbacken in unkontrollierte Schwingungen zu geraten und partielle Verformungen zu erleiden, die die Qualität des Wellrohrs mindern. Das Wellrohr kann nämlich am Austritt des Formkanals noch eine Temperatur aufweisen, bei der es verformbar ist.

Aufgabe der vorliegenden Erfindung ist es, eine verbesserte Korrugatoreinrichtung zu schaffen, die diese Nachteile vermeidet.

Erfindungsgemäß wird diese Aufgabe mit dem Gegenstand des Anspruchs 1 gelöst. Es wird eine Korrugatoreinrichtung vorgeschlagen zur Herstellung von Kunststoffrohren, vorzugsweise Wellrohren aus einem aus einem Extruder austretenden Kunststoffschmelzeschlauch, mit einem aus wandernden Formbacken gebildeten Formkanal und einer Entformungseinrichtung für das am Ende des Formkanals austretende Kunststoffrohr, wobei vorgesehen ist, dass die Entformungseinrichtung ein stromabwärts unmittelbar hinter dem Formkanal in dem austretenden Kunststoffrohr angeordnetes stab- oder rohrförmiges Entformungselement umfasst, das durch ein den Formkanal axial durchgreifendes Spannelement in Bezug auf den Formkanal lagefixiert ist und dass das Spannelement mit einer Spannkraft belastet ist und zwischen einem stromaufwärts vor dem Formkanal angeordneten ersten Lager und einem stromabwärts hinter dem Entformungselement angeordneten magnetischen zweiten Lager ausgespannt ist.

Die erfindungsgemäße Korrugatoreinrichtung weist somit eine Entformungseinrichtung auf, die das aus dem Formkanal austretende Kunststoffrohr durch ein in dem Kunststoffrohr angeordnetes Entformungselement stabilisiert. Durch die Anwendung eines magnetischen Lagers wird die Ausformung des endlosen Kunststoffschlauchs nicht behindert.

Es kann vorgesehen sein, dass das Spannelement als Spanndraht ausgebildet ist. Es kann auch ein Spannseil vorgesehen sein, d. h. ein aus dünnen Drähten bzw. Litzen zusammen gedrehtes biegeschlaffes Element. Die Drähte können aus einem Metall, einer Metalllegierung, aus Glas oder aus einem warmfesten Kunststoff ausgebildet sein, dessen Glastemperatur oberhalb der Glastemperatur des für das Kunststoffrohr vorgesehenen Kunststoffs liegt.

Das erste Lager kann als ein mit einer Spannkraft belastetes Loslager ausgebildet sein. Die Spannkraft wird vorzugsweise so gewählt, dass das Spannelement ohne Durchhang ausgespannt ist.

Das zweite Lager kann als ein magnetisches Festlager ausgebildet sein. Zur Erhöhung der Lagerkraft können zwei oder mehr hintereinander angeordnete Magneteinrichtung vorgesehen sein, wie weiter unten beschrieben.

Es kann vorgesehen sein, dass das Entformungselement ein torpedoförmiges Kopfelement aufweist, dessen Spitze dem Formkanal zugewandt ist. Durch die torpedoförmige, d. h. geschossförmige Ausbildung des Kopfelements ist das Einfädeln des Entformungselements in das Kunststoffrohr erleichtert und ein stirnseitiger Kantenbereich vermieden, der die Innenwand des Kunststoffrohrs beschädigen könnte.

Es kann weiter vorgesehen sein, dass das Entformungselement ein zylinderförmiges Fußelement aufweist. Das Fußelement kann mit dem Entformungselement fest verbunden sein oder einstückig ausgebildet sein.

In bevorzugten Ausbildungen kann das Entformungselement einen rohrförmigen Mittelabschnitt aufweisen. Durch den rohrförmigen Mittenabschnitt wird die Masse des Entformungselements reduziert, so dass bei gleichem Material eine geringere Spannkraft am Spannelement angewendet werden muss als bei massiver Ausbildung. Das Material und die Oberfläche des Entformungselements sind vorteilhafter so gewählt, dass ein geringer Reibbeiwert erreicht wird und dass ein Anhaften der Oberfläche an dem Kunststoffrohr vermieden wird. Weiter ist eine harte, abriebfeste Oberfläche von Vorteil.

Es kann vorgesehen sein, dass das torpedoförmige Kopfelement und das zylinderförmige Fußelement ein zentrisches Durchgangsloch aufweisen, das von dem Spannelement durchgriffen ist.

Weiter kann vorgesehen sein, dass das Entformungselement auf dem Spannelement fixiert ist. Bei metallischer Ausbildung von Spannelement und Entformungselement kann beispielsweise eine Lot- oder Schweißverbindung zur Fixierung vorgesehen sein.

Es kann vorgesehen sein, dass das zweite Lager eine oder mehrere Magneteinrichtungen aufweist, die ein torpedoförmiges Ankerelement durch

Magnetkraft in axialer Lage fixieren, wobei die Spitze des Ankerelements dem Formkanal zugewandt ist. Durch die torpedoförmige bzw. geschossförmige Ausbildung des Ankerelements ist das Einfädeln des Ankerelements in das Kunststoffrohr erleichtert und ein stirnseitiger Kantenbereich vermieden, der die Innenwand des Kunststoffrohrs beschädigen könnte.

Weiter kann vorgesehen sein, dass das Ankerelement auf dem Spannelement fixiert ist. Bei metallischer Ausbildung von Spannelement und Ankerelement kann beispielsweise eine Lot- oder Schweißverbindung zur Fixierung vorgesehen sein.

Es kann vorgesehen sein, dass die Magneteinrichtung zwei einander gegenüberstehende axial magnetisierte Permanentmagnete umfasst, die auf einer weichmagnetischen Grundplatte angeordnet sind und zwischen denen ein Luftspalt ausgebildet ist, durch den das Kunststoffrohr hindurchgeführt ist. Die Permanentmagnete können vorteilhafterweise aus dem Werkstoff Neodym-Eisen-Bor (NdFeB) ausgebildet sein.

Es kann weiter vorgesehen sein, dass das Ankerelement zumindest abschnittsweise aus einem nichtmagnetischen Material ausgebildet ist, und dass das Ankerelement ein weichmagnetisches Fußelement aufweist, das magnetisch im Luftspalt der Magneteinrichtung fixiert ist.

Es kann aber auch vorgesehen sein, dass das Entformungselement wie das Ankerelement ausgebildet ist und ein weichmagnetisches Fußelement aufweist, das magnetisch im Luftspalt der Magneteinrichtung fixiert ist. In dieser Ausführung bildet das Entformungselement zugleich das Ankerelement, so dass ein vereinfachter Aufbau der Entformungseinrichtung möglich ist.

In einer weiteren vorteilhaften Ausführung kann vorgesehen sein, dass die Magneteinrichtung eine elektrische Zylinderspule mit einer Wicklung und eine elektrische Spannungsquelle umfasst, und dass der Innenraum der Zylinderspule einen zylinderförmigen Luftspalt bildet, durch den das Kunststoffrohr hindurchgeführt ist.

Es kann vorgesehen sein, dass das Ankerelement aus einem weichmagnetischen Material ausgebildet ist, und dass das Ankerelement bei bestromter Wicklung vollständig in die Wicklung eintaucht. Das Ankerelement ist vorzugsweise aus Vollmaterial ausgebildet, um eine maximale Kraftwirkung zu entfalten. Die Wicklung kann sowohl mit Gleichstrom als auch mit Wechselstrom bestromt werden.

Es kann vorgesehen sein, dass das erste Lager als eine federbelastete Kraftmessdose ausgebildet ist.

Es kann auch vorgesehen sein, dass die von der Kraftmessdose bereitgestellte Spannkraft durch Verschiebung der Kraftmessdose längs der Längsachse des Spannelements einstellbar ist und/oder dass die von der Kraftmessdose bereitgestellte Federkraft an der Kraftmessdose einstellbar ist.

In einer alternativen Ausbildung kann vorgesehen sein, dass das erste Lager aus einer Rolle gebildet ist, über die das Spannelement umgelenkt ist, wobei das freie Ende des Spannelements mit einem Massestück belastet ist, dessen Gewichtskraft der Spannkraft des Spannelements entspricht.

In einer weiteren Ausbildung kann vorgesehen sein, dass das erste Lager durch einen oder mehrere hintereinander angeordnete elektrische Zugmagnete gebildet ist, deren Zuganker aus der Nulllage ausgelenkt sind. Die Zugkraft kann beispielsweise durch Variation des durch die Spulenwicklung des Zugmagnets fließenden elektrischen Stroms eingestellt werden. Weiter kann die bei Gleichstrom und Wechselstrom unterschiedliche Kraft-Weg-Kennlinie ausgenutzt werden. Mit Gleichspannung betriebene Magnete können eine stark nichtlineare Kraft-Weg-Kennlinie aufweisen, wobei die Kraft bei vollständig eingetauchtem Anker am größten ist. Hingegen haben Wechselstrom-Zugmagnete bereits zu Beginn des Anziehens eine große Kraft.

Es kann weiter vorgesehen sein, dass das erste Lager durch einen oder mehrere hydraulische oder pneumatische Stellzylinder gebildet ist.

Die Erfindung wird nun anhand von Ausführungsbeispielen näher erläutert. Es zeigen
- Fig. 1a bis 1 c: eine Korrugatoreinrichtung zur Herstellung von Wellrohren mit einem ersten Ausführungsbeispiel der erfindungsgemäßen Entformungseinrichtung in schematischer Darstellung;
- Fig. 2: eine Einzelheit II in Fig. 1 a in vergrößerter Darstellung;
- Fig. 3: eine Schnittdarstellung längs der Schnittlinie III-III in Fig. 1b;
- Fig. 4: ein zweites Ausführungsbeispiel der erfindungsgemäßen Entformungseinrichtung.

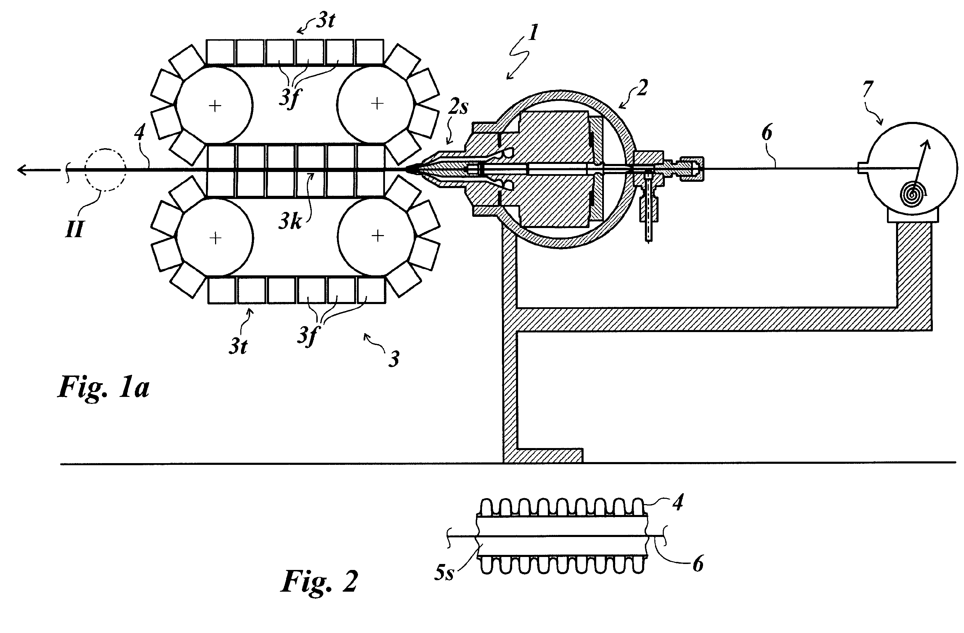

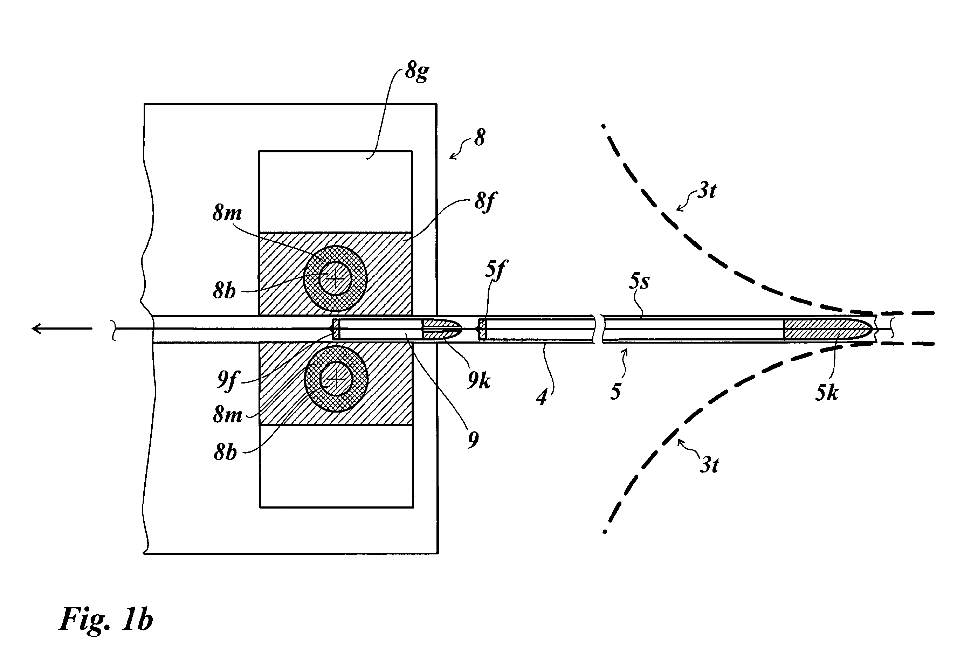

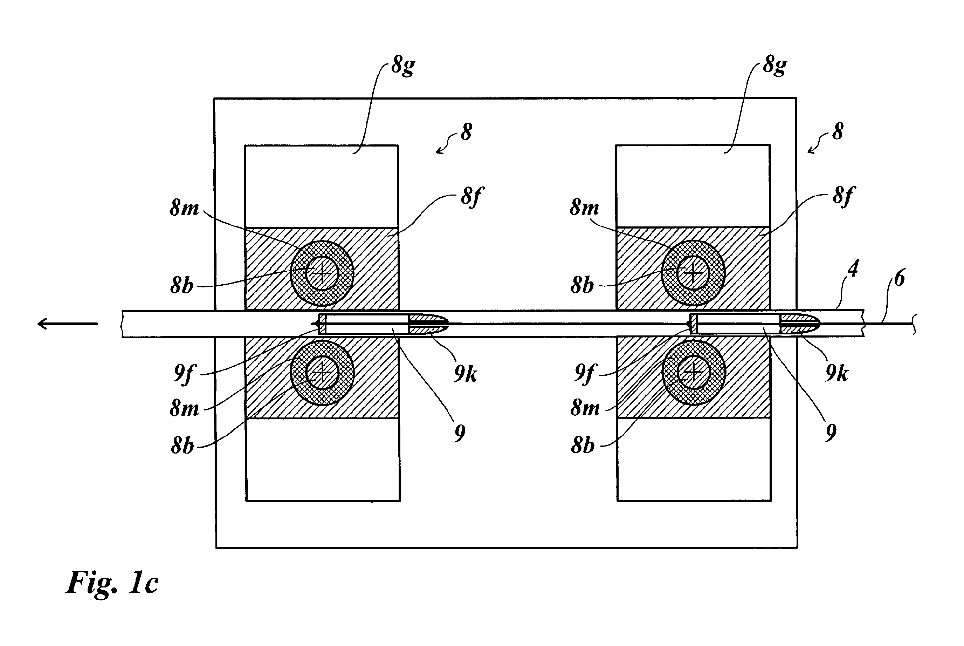

Die Fig. 1 a bis 1 c zeigen eine Korrugatoreinrichtung 1 zum Herstellen von Wellrohren 2 aus einem spritzfähigen thermoplastischen Kunststoff. Die Wellrohre 2 weisen in dem in Fig. 1a bis 1c dargestellten Ausführungsbeispiel einen Außendurchmesser von 7 mm und einen Innendurchmesser von 5 mm auf. Die Wellen weisen folglich eine Höhe von 1 mm auf.

Fig. 1a verdeutlicht den Aufbau der Korrugatoreinrichtung. Die Korrugatoreinrichtung 1 umfasst einen Extruder 2 mit einem Spritzkopf 2s und einen Korrugator 3 mit einem aus wandernden Formbackenpaaren gebildeten Formkanal 3k und einer Entformungseinrichtung 5. Aus der Düse des Spritzkopfs 2s des Extruders 2 tritt ein Kunststoffschmelzeschlauch in den Formkanal 3k des Korrugators 3 ein. Die Formbacken 3f bewegen sich hintereinander liegend in zwei umlaufenden Transportsträngen 3t in Art von zwei umlaufend angetriebenen Förderbändern. Der Formkanal 3k ist in der gemeinsamen Förderstrecke, in der die Formbacken 3f der Formbackenpaare einander zugewandt sind, ausgebildet. Die Formbacken 3f weisen gewellte Formflächen auf. Sie sind in der den Formkanal 3k bildenden Formstrecke gekühlt, so dass in dem Formkanal 3k unter Abkühlung des plastifizierten heißen Kunststoffschlauchs ein endloses Wellrohr 4 ausgeformt wird (Fig. 2).

Stromabwärts hinter dem Korrugator 3 sind wesentliche Komponenten der Entformungseinrichtung 5 angeordnet. Die Entformungseinrichtung 5 umfasst eine in dem Wellrohr 4 angeordnete Entformungsstange 5s, die durch einen den Extruder 2, den Formkanal 3k sowie das Wellrohr 4 durchgreifenden Spanndraht 6 lagefixiert ist. Die Entformungsstange 5s stützt das Wellrohr 4 von innen ab und verhindert so das einseitige Anhaften des Wellrohrs 4 an den sich öffnenden Formbacken des Korrugators 3 und eventuell auftretende Schwingungen des austretenden Wellrohrs 4. Das Wellrohr 4 kann nämlich am Austritt des Formkanals 3k noch eine Temperatur aufweisen, bei der es verformbar ist.

Der Aufbau der Entformungsstange 5s ist in Fig. 1 b dargestellt. Die Entformungsstange 5s ist rohrförmig ausgebildet und weist ein torpedoförmiges Kopfelement 5k, das zum Austritt des Korrugators 3 weist, sowie ein zylindrisches Fußelement 5f auf. Die im Wesentlichen rohrförmige Ausbildung ist vorgesehen, um das Gewicht der Entformungsstange 5s gering zu halten. Der Durchmesser der Entformungsstange 5s entspricht abzüglich einer Spielzugabe dem Innendurchmesser des Wellrohrs 4.

Die Entformungsstange 5s ist vorzugsweise aus einem nichtmagnetischen Material ausgebildet, beispielsweise aus Messing. Die Entformungsstange 5s ist auf einem Spanndraht 6 gelagert, der den Korrugator 3 und den Extruder 2 durchgreift und zwischen einem Festlager sowie einem Loslager gespannt ist. Das Loslager übt eine Spannkraft auf den Spanndraht 6 aus. Das Loslager ist durch eine am Gestell des Extruders 2 angeordnete Kraftmessdose 7 gebildet, deren Messfeder die Spannkraft aufbringt. Durch Verschieben der Kraftmessdose 7 in Achsrichtung des Spanndrahts 6 kann die Spannkraft eingestellt werden, die zugleich an der Kraftmessdose 7 ablesbar ist.

Wegen des den Extruder 2 durchgreifenden Spanndrahts 6 ist ein Anschlussstutzen 2a zur Zuführung des Kunststoffmaterials senkrecht zur Extruderachse angeordnet.

Das Kopfelement 5k sowie das Fußelement 5e weisen ein zentrisches Durchgangsloch auf. Durch die beiden fluchtenden Durchgangslöcher ist der Spanndraht 6 geführt. Die Entformungsstange 5s ist auf dem Spanndraht 6 fixiert, beispielsweise stoffschlüssig durch eine auf dem Fußelement 5f angeordnete Lotperle.

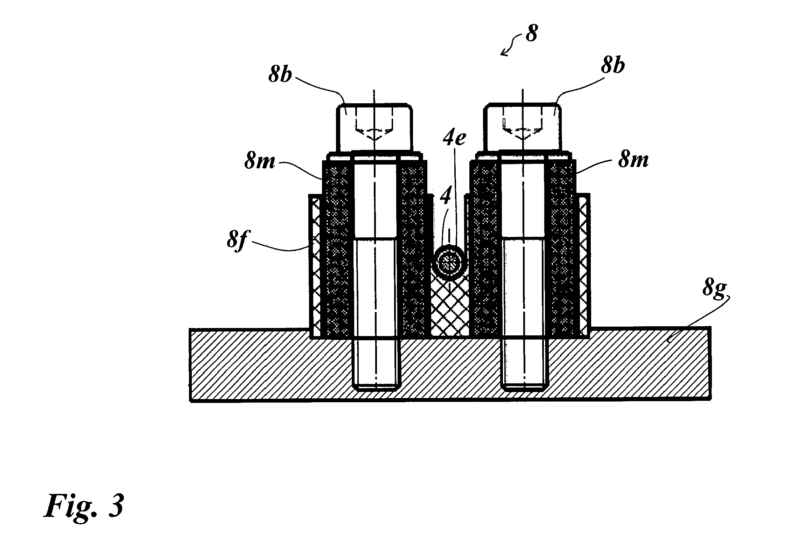

Das Festlager des Spanndrahts 6 umfasst eine Magneteinrichtung 8 und ein im Innern des Wellrohrs 4 angeordnetes torpedoförmiges Ankerelement 9, das durch die Magneteinrichtung 8 in Achsrichtung des Spanndrahts 6 fixiert ist (Fig. 1c und 3). Das Ankerelement 9 gleitet durch das Wellrohr 4, das aus dem Formkanal 3k kontinuierlich austritt.

Die Magneteinrichtung 8 weist zwei hohlzylinderförmige radial magnetisierte Permanentmagnete 8m auf, zwischen denen ein Luftspalt ausgebildet ist, der von dem Wellrohr 4 durchgriffen ist. Die Permanentmagnete 8m sind von Befestigungsschrauben 8b durchgriffen, die in Gewindelöchern einer weichmagnetischen Grundplatte 8g aufgenommen sind. Das weichmagnetische Material bildet einen Rückschluss für die aus den Permanentmagneten 8m senkrecht aus der Zylinderfläche austretenden magnetischen Feldlinien. Die Permanentmagnete 8m können beispielsweise aus Neodym-Eisen-Bor (NdFeB) ausgebildet sein.

Die Permanentmagnete 8m durchgreifen ein Führungselement 8f, das eine zwischen den beiden Permanentmagneten 8m angeordnete Führungsnut für das Wellrohr 4 aufweist. Das Führungselement 8f ist aus einem nichtmagnetischen Material ausgebildet, vorzugsweise aus einem Kunststoff mit geringem Reibungskoeffizienten. Das aus dem Korrugator (3) kontinuierlich austretende Wellrohr 4 gleitet in der Führungsnut des Führungselements 8f entlang und wird weiter stromabwärts aufgewickelt.

Das torpedoförmige Ankerelement 9 ist wie die weiter oben beschriebene Entformungsstange 5 im Wesentlichen rohrförmig ausgebildet und weist ein torpedoförmiges Kopfelement 9k sowie ein zylindrisches Fußelement 9f auf. Der Durchmesser des Ankerelements 9 entspricht abzüglich einer Spielzugabe dem Innendurchmesser des Wellrohrs 4.

Das Ankerelement 9 ist mit Ausnahme des Fußelements 9f aus einem nichtmagnetischen Material ausgebildet, beispielsweise aus Messing. Das Fußelement 9f ist aus einem weichmagnetischen Material gebildet und fixiert das Ankerelement 9 im Luftspalt der Magneteinrichtung 8. Das Kopfelement 9k und das Fußelement 9f weisen ein Durchgangsloch auf, das von dem Spanndraht 6 durchgriffen ist. Das Ankerelement 9 ist auf dem Spanndraht 6 fixiert, beispielsweise stoffschlüssig durch eine auf dem Fußelement 9f angeordnete Lotperle.

Die Haltekraft für das Ankerelement 9 wird dadurch erzeugt, dass in dem durch die beiden Permanentmagnete 8m, die weichmagnetische Grundplatte 8g und das weichmagnetische Fußelement 9f gebildeten Magnetkreis der magnetische Widerstand dann am geringsten ist, wenn sich das Fußelement 9f im Luftspalt befindet. Bei Änderung des magnetischen Widerstands entsteht eine Reluktanzkraft oder Maxwellsche Kraft, die immer so wirkt, dass sich der magnetische Widerstand verringert. Diese Reluktanzkraft fixiert das Ankerelement 9 in der Magneteinrichtung 8. In dem in Fig. 1c dargestellten Ausführungsbeispiel sind zwei hintereinander angeordnete Magneteinrichtungen 8 vorgesehen, um die erforderliche Haltekraft aufzubringen.

Es ist möglich, die Entformungsstange 5s zugleich als vorderes Ankerelement auszubilden, indem das nichtmagnetische Fußelement 5f durch ein weichmagnetisches Fußelement ersetzt wird.

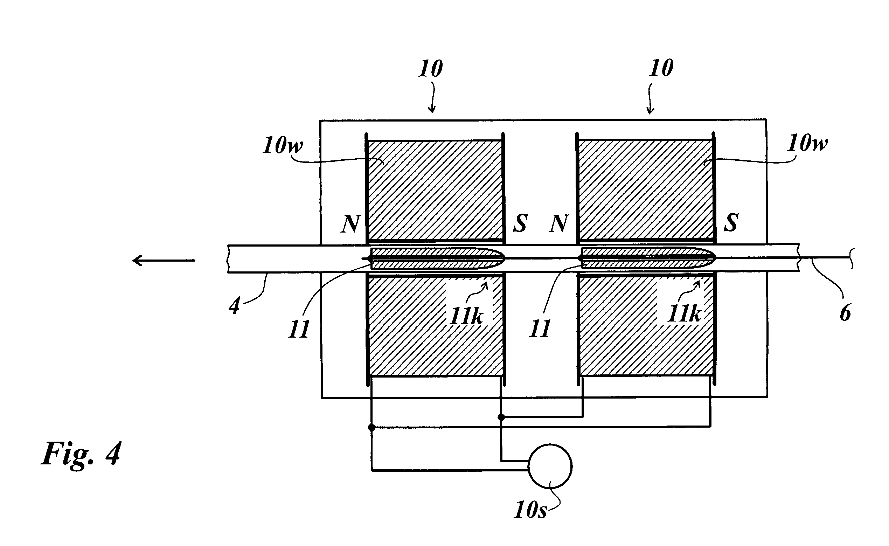

Fig. 4 zeigt ein zweites Ausführungsbeispiel der erfindungsgemäßen Entformungseinrichtung, die wie die in Fig. 1 dargestellte Entformungseinrichtung aufgebaut ist, mit dem Unterschied, dass elektromagnetische Magneteinrichtungen 10 zur Ausbildung des Festlagers des Spanndrahts 6 vorgesehen sind.

Die Magneteinrichtung 10 ist als eine elektrische Zylinderspule mit einer Wicklung 10w ausbildet, in die ein weichmagnetisches torpedoförmiges Ankerelement 11 eintaucht, das als ein Zuganker ausgebildet ist. Das Ankerelement 11 ist als ein Vollkörper ausgebildet, der einen torpedoförmigen Kopfabschnitt 11 k und ein zentrisches Durchgangsloch aufweist. Das Durchgangsloch ist von dem Spanndraht 6 durchgriffen, der wie in Fig. 1 beschrieben, fest mit dem Ankerelement 11 verbunden ist.

Die Wicklung 10w ist mit einer schematisch angedeuteten Spannungsquelle 10s verbunden, wobei in der stromdurchflossenen Wicklung 10w ein Magnetfeld aufgebaut wird. Die Magnetfeldlinien konzentrieren sich im Inneren der Zylinderspule.

Zur Veranschaulichung der durch die beschriebene Anordnung hervorgerufenen Kraftwirkung kann die Lenzsche Regel herangezogen werden, die besagt, dass eine Kraft oder Bewegung so gerichtet ist, dass sie ihrer Ursache entgegenwirkt. Folglich ist ein Magnetkreis um eine stromdurchflossene Spule bestrebt, seinen magnetischen Widerstand zu verringern. Der magnetische Widerstand ist am geringsten, wenn das Ankerelement 11 im Innern der Zylinderspule angeordnet ist. Das Ankerelement 11 setzt einer Bewegung, die es aus der Zylinderspule zu entfernen sucht, eine Magnetkraft entgegen, die um so höher ist, je weiter das Ankerelement 11 aus der Zylinderspule ragt.

Der Vorteil der elektromagnetischen Magneteinrichtung 10 besteht in der einfachen Regulierung der magnetischen Haltekraft und in der selbsttätigen Zentrierung des Ankerelements 11 in der stromdurchflossenen Zylinderspule. Dadurch gleitet das Wellrohr 4 besonders gut durch die Zylinderspule hindurch, deren Innendurchmesser dem Außendurchmesser des Wellrohrs 4 zuzüglich einer Spielzugabe entspricht.

### Bezugszeichenliste

- 1: Anlage
- 2: Extruder
- 2a: Anschlussstutzen
- 2s: Spritzkopf
- 3: Korrugator
- 3f: Formbacken
- 3k: Formkanal
- 3t: Transportstrang
- 4: Wellrohr
- 5: Entformungseinrichtung
- 5s: Entformungsstange
- 5f: Fußelement
- 5k: torpedoförmiges Kopfelement
- 6: Spanndraht
- 7: Kraftmessdose
- 8: Magneteinrichtung
- 8b: Befestigungsschraube
- 8f: Führungselement
- 8g: weichmagnetische Grundplatte
- 8m: Permanentmagnet
- 9: Ankerelement
- 9f: weichmagnetisches Fußelement
- 9k: torpedoförmiges Kopfelement
- 10: Magneteinrichtung
- 10s: Spannungsquelle
- 10w: Wicklung
- 11: Ankerelement
- 11 k: torpedoförmiger Kopfabschnitt

## Patentansprüche

1. Korrugatoreinrichtung zur Herstellung von Kunststoffrohren (4), vorzugsweise Wellrohren aus einem aus einem Extruder (2) austretenden Kunststoffschmelzeschlauch,
mit einem aus wandernden Formbacken (3f) gebildeten Formkanal (3k) und einer Entformungseinrichtung (5) für das am Ende des Formkanals (3k) austretende Kunststoffrohr (4),
**dadurch gekennzeichnet,**
**dass** die Entformungseinrichtung (5) ein stromabwärts unmittelbar hinter dem Formkanal (3k) in dem austretenden Kunststoffrohr (4) angeordnetes stab- oder rohrförmiges Entformungselement (5s) umfasst, das durch ein den Formkanal (3k) axial durchgreifendes Spannelement (6) in Bezug auf den Formkanal (3k) lagefixiert ist; und
**dass** das Spannelement (6) mit einer Spannkraft belastet ist und zwischen einem stromaufwärts vor dem Formkanal (3k) angeordneten ersten Lager und einem stromabwärts hinter dem Entformungselement (5s) angeordneten magnetischen zweiten Lager gespannt ist.

2. Korrugatoreinrichtung nach Anspruch 1,
**dadurch gekennzeichnet,**
**dass** das Spannelement (6) als Spanndraht und/oder Spannseil ausgebildet ist.

3. Korrugatoreinrichtung nach Anspruch 1 oder 2,
**dadurch gekennzeichnet,**
**dass** das erste Lager als ein mit einer Spannkraft belastetes Loslager ausgebildet ist.

4. Korrugatoreinrichtung nach einem der vorangehenden Ansprüche,
**dadurch gekennzeichnet,**
**dass** das zweite Lager als ein magnetisches Festlager ausgebildet ist.

5. Korrugatoreinrichtung nach einem der vorangehenden Ansprüche,
**dadurch gekennzeichnet,**
**dass** das Entformungselement (5s) ein torpedoförmiges Kopfelement (5k) aufweist, dessen Spitze dem Formkanal (3k) zugewandt ist.

6. Korrugatoreinrichtung nach Anspruch 5,
**dadurch gekennzeichnet,**
**dass** das Entformungselement (5s) ein zylinderförmiges Fußelement aufweist.

7. Korrugatoreinrichtung nach einem der vorangehenden Ansprüche,
**dadurch gekennzeichnet,**
**dass** das Entformungselement (5s) auf dem Spannelement (6) fixiert ist.

8. Korrugatoreinrichtung nach einem der vorangehenden Ansprüche,
**dadurch gekennzeichnet,**
**dass** das zweite Lager eine oder mehrere Magneteinrichtungen (8, 10) aufweist, die ein torpedoförmiges Ankerelement (9, 11) durch Magnetkraft in axialer Lage fixieren, wobei die Spitze des Ankerelements (9, 11) dem Formkanal (3k) zugewandt ist.

9. Korrugatoreinrichtung nach Anspruch 8,
**dadurch gekennzeichnet,**
**dass** das Ankerelement (9, 11) auf dem Spannelement (6) fixiert ist.

10. Korrugatoreinrichtung nach Anspruch 8 oder 9,
**dadurch gekennzeichnet,**
**dass** die Magneteinrichtung (8) zwei einander gegenüberstehende axial magnetisierte Permanentmagnete (8m) umfasst, die auf einer weichmagnetischen Grundplatte (8g) angeordnet sind und zwischen denen ein Luftspalt ausgebildet ist, durch den das Kunststoffrohr (4) hindurchgeführt ist.

11. Korrugatoreinrichtung nach einem der Ansprüche 8 bis 10,
**dadurch gekennzeichnet,**
**dass** das Ankerelement (9) zumindest abschnittsweise aus einem nichtmagnetischen Material ausgebildet ist, und
**dass** das Ankerelement (9) ein weichmagnetisches Fußelement (9f) aufweist, das magnetisch im Luftspalt der Magneteinrichtung (8) fixiert ist.

12. Korrugatoreinrichtung nach einem der Ansprüche 8 bis 11,
**dadurch gekennzeichnet,**
**dass** das Entformungselement (5s) wie das Ankerelement (9) ausgebildet ist und ein weichmagnetisches Fußelement (9f) aufweist, das magnetisch im Luftspalt der Magneteinrichtung (8) fixiert ist.

13. Korrugatoreinrichtung nach Anspruch 8 oder 9,
**dadurch gekennzeichnet,**
**dass** die Magneteinrichtung (10) eine elektrische Zylinderspule mit einer Wicklung (10w) und eine elektrische Spannungsquelle (10s) umfasst, und
**dass** der Innenraum der Zylinderspule einen zylinderförmigen Luftspalt bildet, durch den das Kunststoffrohr (4) hindurchgeführt ist.

14. Korrugatoreinrichtung nach Anspruch 13,
**dadurch gekennzeichnet,**
**dass** das Ankerelement (11) aus einem weichmagnetischen Material ausgebildet ist, und
**dass** das Ankerelement (11) bei bestromter Wicklung (10w) vollständig in die Wicklung (10w) eintaucht.

15. Korrugatoreinrichtung nach einem der vorangehenden Ansprüche,
**dadurch gekennzeichnet,**
**dass** das erste Lager als eine federbelastete Kraftmessdose (7) ausgebildet ist.
